# EUROPEAN PATENT SPECIFICATION

(11) **EP 2 723 220 B1**
(45) Date of publication and mention of the grant of the patent: **10.06.2015**
(21) Application number: 12728571.6
(22) Date of filing: 20.06.2012
(51) Int. Cl.: A47J 27/10, A23L 1/01

(54) **COOKING DEVICE WHEREIN THE SOUS-VIDE METHOD IS APPLIED**
KOCHVORRICHTUNG MIT ANWENDUNG DES VAKUUMGARVERFAHRENS
DISPOSITIF DE CUISSON DANS LEQUEL ON UTILISE LE PROCÉDÉ SOUS VIDE

(30) Priority: 27.06.2011 TR 201106332
(43) Date of publication of application: 30.04.2014
(73) Proprietor: Arçelik Anonim Sirketi, 34950 Istanbul (TR)
(72) Inventor: COSAN, Ahmet Ferit, 34950 Istanbul (TR)
(86) International application number: PCT/EP2012/061831
(87) International publication number: WO 2013/000790

(56) References cited:
- WO-A2-2011/031306
- DE-A1-102006 032 969
- US-A- 5 542 344
- US-A1- 2008 066 624

## Description

The present invention relates to a cooking device wherein the cooking process is performed by the sous-vide method.

The food cooking method known as sous-vide or under vacuum cooking is based on the cooking of the foods in air-tight plastic bags at low temperatures (40 - 80 °C) and for long periods of time (24 - 48 hours) in water. In the sous-vide method, raw foods are put in the plastic bag by being marinated or non-marinated and provided not to contact the ambient air by being vacuumed. In the devices wherein the cooking process is performed by the sous-vide technique, the foods previously prepared in the said manner are placed in the water which is put into the cooking chamber and a homogenous heat distribution is provided by heating the water in order to cook the food. In the sous-vide cooking method, the level of the temperature of the water wherein the food in the vacuum-bag is cooked is required to be precisely measured, and water level sensors and temperature sensors are used. The decreasing of the water level and the variability of the water temperature adversely affect the cooking quality. In the sous-vide cooking method, the air-tightness of the vacuum-bag wherein the foods are placed is very important and when a small leakage occurs in the bag, this cannot be noticed by the user and thus the foods contact air and water and the cooking process fails.

In the United States Patent Application No. US2008066624, the International Patent Application No. WO2011031306 and the United States Patent No. US5542344, cooking and heating devices are explained wherein the sous-vide method is used.

The aim of the present invention is the realization of a cooking device wherein the cooking process is performed by the sous-vide method and precaution is taken for the errors that may occur.

The cooking device realized in order to attain the aim of the present invention, explicated in the first claim and the respective claims thereof, comprises a cooking chamber wherein water is put and the cooking process is performed by the sous-vide method and a conductivity sensor which consists of two electrodes that are mounted to the side wall of the cooking chamber. When an increase occurs in the water conductivity values detected by the conductivity sensor during the cooking process, the cooking process is terminated by the control unit and the user is warned.

The foods to be cooked by the sous-vide method are prepared by being placed in vacuumed-bag. When there is a hole in the bag that cannot be detected by human eye, the said hole cannot be noticed by the user and the cooking process is started. Substances such as salt and spices that leak from the bag into the water increase the conductivity level of the water, the high conductivity values detected by the conductivity sensor are transmitted to the control unit and the control unit terminates the cooking process by turning off the heater. The control unit also provides the user to be warned by light and/or sound. Thus, an error that requires the food to be wasted at the end of a quite long cooking process is prevented.

In an embodiment of the present invention, the cooking device comprises an NTC temperature sensor mounted near the conductivity sensor and which contacts water when the water is at a sufficient level and does not contact water when the water level decreases. When accurate data cannot be received from the conductivity sensor due to any reason, the water level is controlled by means of the temperature sensor and the water level is provided to remain above the conductivity sensor.

In another embodiment of the present invention, the conductivity sensor and the temperature sensor are placed on a sensor holder and mounted on the side wall of the cooking chamber as a single unit. The temperature sensor is placed at the upper side of the conductivity sensor on the sensor holder or mounted on the wall of the cooking chamber so as to be at the upper side of the conductivity sensor.

In the cooking process performed in the cooking device of the present invention by the sous-vide method, the high conductivity values received from the conductivity sensor are evaluated and thus the leakages that occur in the vacuumed-bags wherein the foods are placed can be detected, the cooking process is terminated in due time and the food is prevented from being wasted after a long cooking process.

The cooking device realized in order to attain the aim of the present invention is illustrated in the attached figures, where:

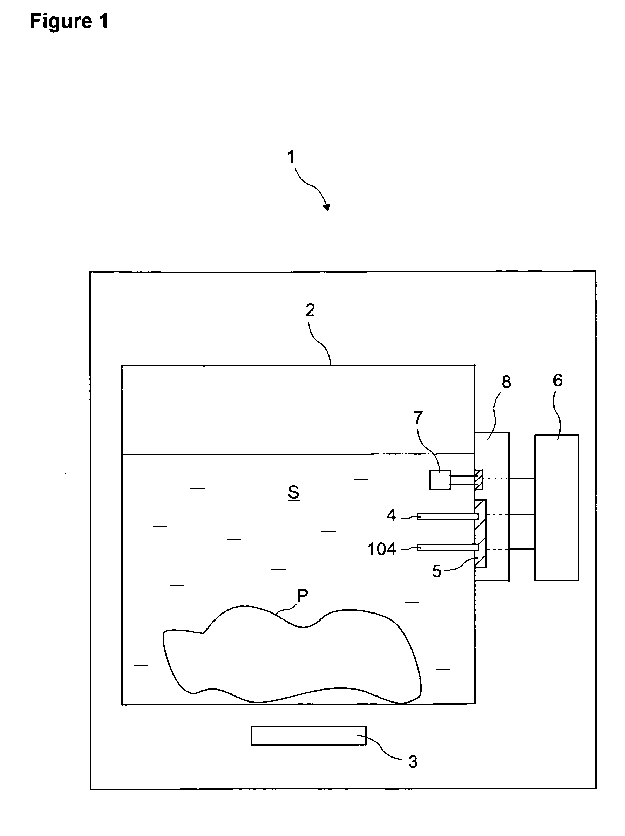

Figure 1 - is the schematic view of a cooking device.

The elements illustrated in the figures are numbered as follows:
1. Cooking device
2. Cooking chamber
3. Heater
4. 104. Electrode
5. Conductivity sensor
6. Control unit
7. Temperature sensor
8. Sensor holder

The cooking device (1) which performs the cooking process of foods by means of the sous-vide method comprises a cooking chamber (2) wherein the foods placed in air-tight plastic bags (P) are cooked by being placed into the water (S) the level of which is determined for cooking in desired quality, a heater (3) which provides the water (S) in the cooking chamber (2) to be heated in accordance with the sous-vide cooking technique, a conductivity sensor (5) which has two electrodes (4, 104) that are mounted on the side or rear wall of the cooking chamber (2) and extend into the cooking chamber (2) in the horizontal direction and which detects the conductivity of the water (S) in the cooking chamber (2).

The cooking device (1) of the present invention comprises a control unit (6) that terminates the cooking process and/or provides the user to be warned when an increase occurs in the conductivity values of the water (S) detected by the conductivity sensor (5).

In the cooking device (1) of the present invention, the control unit (6) evaluates the positive deviations in the water (S) conductivity values that are detected by the conductivity sensor (5). When a puncture occurs in the plastic bag (P) wherein the food is placed, the food contacts the air and the water (S), substances such as salt and spices, which increase conductivity, leak from the food into the water (S) and conductivity values that are higher than the normal conductivity values of the water (S) are detected by the conductivity sensor (5). Upon receiving the high conductivity data from the conductivity sensor (5), the control unit (6) terminates the cooking process by turning off the heater (3) and provides the user to be warned audibly by a means such as alarm or by means of a glowing light appearing on the control panel. Thus, the food prepared in the improper bag (P) which leaks air and water is prevented from being cooked and thus unnecessary energy consumption and waste of the food are prevented.

In another embodiment of the present invention, the cooking device (1) comprises an NTC (Negative Temperature Coefficient) temperature sensor (7) mounted near the conductivity sensor (5), contacting the water (S) when the water (S) in the cooking chamber (2) is at a sufficient level for cooking the foods by the sous-vide method and not contacting the water (S) when the water (S) level decreases and which detects the temperature inside the water (S) or outside the water (S) depending on the change in the water (S) level. The temperature values detected by the NTC temperature sensor (7) when contacting or not contacting the water (S) in the cooking chamber (2) are different.

In order that the increase in the conductivity values of the water (S) in the cooking chamber (2) can be accurately measured, the water (S) level should not fall below the conductivity sensor (5) level, that is, both of the electrodes (4, 104) should contact the water (S). In the embodiment of the present invention, the water (S) level is effectively controlled by means of the temperature sensor (7) which is mounted near the electrodes (4, 104) of the conductivity sensor (5). The temperature sensor (7) is also used for controlling the water (S) level besides measuring temperature since the temperature values measured by the temperature sensor (7) inside or outside the water (S) are different. Inaccurate data may be received from the conductivity sensor (5) due to moisture or the substances that adhere on the electrodes (4, 104), in this situation the control unit (6) evaluates the data received from the temperature sensor (7) and thus determines whether or not the temperature sensor (7) and hence the electrodes (4, 104) contact the water (S) and accordingly whether or not the water (S)

level in the cooking chamber (2) decreases.

In another embodiment of the present invention, the cooking device (1) comprises a sensor holder (8) which keeps together the conductivity sensor (5) and the temperature sensor (7) as a single unit and provides the conductivity sensor (5) and the temperature sensor (7) to be mounted on the side or rear wall of the cooking chamber (2).

In another embodiment of the present invention, the temperature sensor (7) is placed at the upper side of the conductivity sensor (5) on the sensor holder (8) or mounted on the side or rear wall of the cooking chamber (2) so as to be at the upper side of the conductivity sensor (5). Thus, the water (S) level is provided to always remain above the conductivity sensor (5).

In the cooking process performed in the cooking device (1) of the present invention by the sous-vide method, the values received from the conductivity sensor (5) are evaluated and thus any air/water leakage that occurs in the vacuumed-bags (P) wherein the foods are placed can be detected, the cooking process is terminated in due time and the food is prevented from being wasted. By means of the temperature sensor (7) which is mounted at the upper side of the conductivity sensor (5) the water (S) level is effectively controlled and the conductivity sensor (5) is provided to make accurate measurement.

It is to be understood that the present invention is not limited by the embodiments disclosed above and a person skilled in the art can easily introduce different embodiments. These should be considered within the scope of the protection disclosed by the claims of the present invention.

## Claims

1. A cooking device (1) which performs the cooking process of foods by means of the sous-vide method, comprising a cooking chamber (2) wherein the foods placed in air-tight plastic bags (P) are cooked by being placed into the water (S) at a certain level, a conductivity sensor (5) which has two electrodes (4, 104) that are mounted on the wall of the cooking chamber (2) and extend into the cooking chamber (2) in the horizontal direction and which detects the conductivity of the water (S) in the cooking chamber (2), **characterized by** a control unit (6) for terminating the cooking process and/or providing the user to be warned when an increase occurs in the conductivity of the water (S) detected by the conductivity sensor (5).

2. A cooking device (1) as in Claim 1, **characterized by** a temperature sensor (7) mounted near the conductivity sensor (5) and which detects the temperature inside the water (S) or outside the water (S) depending on the change in the water (S) level in the cooking chamber (2).

3. A cooking device (1) as in Claim 2, **characterized by** the NTC type temperature sensor (7).

4. A cooking device (1) as in any one of the above claims, **characterized by** a sensor holder (8) for keeping together the conductivity sensor (5) and the temperature sensor (7) as a single module and providing the conductivity sensor (5) and the temperature sensor (7) to be mounted on the wall of the cooking chamber (2).

5. A cooking device (1) as in any one of the above claims, **characterized in that** the temperature sensor (7) is placed at the upper side of the conductivity sensor (5) on the sensor holder (8) or mounted on the wall of the cooking chamber (2) so as to be at the upper side of the conductivity sensor (5).

## Patentansprüche

1. Kochvorrichtung (1), die den Garungsvorgang für Lebensmittel im Vakuumgarverfahren durchführt, umfassend eine Garungskammer (2), in der die Lebensmittel in luftdichten Kunststoffbeuteln (P) gegart werden, indem sie in das Wasser (S) mit einem bestimmten Pegel gelegt werden, einen Leitfähigkeitssensor (5), der zwei Elektroden (4, 104) aufweist, die an der Wand der Garungskammer (2) angebracht sind und sich in horizontaler Richtung in die Garungskammer (2) erstrecken und die Leitfähigkeit des Wassers (S) in der Garungskammer (2) detektieren, **gekennzeichnet durch** eine Steuereinheit (6) zum Beenden des Garungsvorgangs und/oder zum Bereitstellen einer Warnung an den Benutzer, wenn ein Anstieg in der Leitfähigkeit des Wassers (S) auftritt, die von dem Leitfähigkeitssensor (5) detektiert wird.

2. Kochvorrichtung (1) nach Anspruch 1, **gekennzeichnet durch** einen Temperatursensor (7), der in der Nähe des Leitfähigkeitssensors (5) angebracht ist und die abhängig von der Veränderung des Pegels des Wassers (S) in der Garungskammer (2) die Temperatur im Wasser (S) oder außerhalb des Wassers (S) detektiert.

3. Kochvorrichtung (1) nach Anspruch 2, **dadurch gekennzeichnet, dass** der Temperatursensor (7) ein Temperatursensor des NTC-Typs ist.

4. Kochvorrichtung (1) nach einem der vorangehenden Ansprüche, **gekennzeichnet durch** einen Sensorhalter (8), um den Leitfähigkeitssensor (5) und den Temperatursensor (7) als ein einzelnes Modul zusammenzuhalten und es zu ermöglichen, dass der Leitfähigkeitssensor (5) und der Temperatursensor (7) an der Wand der Garungskammer (2) angebracht werden.

5. Kochvorrichtung (1) nach einem der vorangehenden Ansprüche, **dadurch gekennzeichnet, dass** der Temperatursensor (7) am Sensorhalter (8) auf der Oberseite des Leitfähigkeitssensors (5) angeordnet ist oder derart an der Wand der Garungskammer (2) angebracht ist, dass er auf der Oberseite des Leitfähigkeitssensors (5) ist.

## Revendications

1. Un dispositif de cuisson (1) qui effectue le processus de cuisson des aliments par la méthode sous vide, comprenant une chambre de cuisson (2) où les aliments placés dans des sacs hermétiques (P) sont cuits en étant placés dans l'eau (S) à un certain niveau, un capteur de conductivité (5) qui présente deux électrodes (4, 104) qui sont montées sur la paroi de la chambre de cuisson (2) et s'étendent dans la chambre de cuisson (2) dans le sens horizontal et qui détecte la conductivité de l'eau (S) dans la chambre de cuisson (2), **caractérisé par** une unité de commande (6) qui termine le processus de cuisson et/ou permet l'avertissement de l'utilisateur s'il ya une augmentation dans la conductivité de l'eau (S) détectée par le capteur de conductivité (5).

2. Un dispositif de refroidissement (1) selon la Revendication 1, **caractérisé par** un capteur de température (7) qui est monté à proximité du capteur de conductivité (5) et qui détecte la température dans l'eau (S) ou à l'extérieur de l'eau (S) en fonction du changement dans le niveau de l'eau (S) dans la chambre de cuisson (2).

3. Un dispositif de cuisson (1) selon la Revendication 2, **caractérisée par** un capteur de température de type NTC (7).

4. Un dispositif de cuisson (1) selon l'une quelconque des revendications précédentes, **caractérisé par** un support de capteur (8) qui maintenir ensemble le capteur de conductivité (5) et le capteur de température (7) comme un seul module et qui permet le montage du capteur de conductivité (5) et du capteur de température (7) sur la paroi de la chambre de cuisson (2).

5. Un dispositif de cuisson (1) selon l'une quelconque des revendications précédentes, **caractérisé en ce que** le capteur de température (7) est placé au côté supérieur du capteur de conductivité (5) sur le support de capteur (8) ou monté sur la paroi de la chambre de cuisson (2) de manière à rester au côté supérieur du capteur de conductivité (5).
